# EUROPÄISCHE PATENTSCHRIFT

(11) **EP 3 408 516 B1**
(45) Veröffentlichungstag und Bekanntmachung des Hinweises auf die Patenterteilung: **29.01.2020**
(21) Anmeldenummer: 16809700.4
(22) Anmeldetag: 06.12.2016
(51) Int. Cl.: F02D 9/10, G01F 1/34, G01F 1/36, G01F 1/40, F02M 26/47, F02M 26/54

(54) **REGELVORRICHTUNG FÜR EINE VERBRENNUNGSKRAFTMASCHINE**
REGULATING DEVICE FOR INTERNAL COMBUSTION ENGINES
DISPOSITIF DE RÈGULATION POUR UN MOTEUR À COMBUSTION INTERNE

(30) Priorität: 29.01.2016 DE 102016101622
(43) Veröffentlichungstag der Anmeldung: 05.12.2018
(73) Patentinhaber: Pierburg GmbH, 41460 Neuss (DE)
(72) Erfinder: CAPAN, Alpay, 41366 Schwalmtal (DE); ANTONI, Christian, 50827 Köln (DE); DELLEN, Franz, 47877 Willich (DE); ÖZCAN, Hasan, 41468 Neuss (DE); EEKHOUT, Robin, 6102 TK Echt (NL); HERTEN, Philipp, 41352 Korschenbroich (DE)
(74) Vertreter: Patentanwälte ter Smitten Eberlein-Van Hoof Rütten Partnerschaftsgesellschaft mbB
(86) Internationale Anmeldenummer: PCT/EP2016/079822
(87) Internationale Veröffentlichungsnummer: WO 2017/129296

(56) Entgegenhaltungen:
- DE-A1-102012 102 103
- JP-A- 2006 194 208
- US-A- 3 817 099
- US-A1- 2006 060 167
- US-A1- 2008 221 775
- US-B1- 7 320 220

## Beschreibung

Die Erfindung betrifft eine Regelvorrichtung für eine Verbrennungskraftmaschine mit einem Strömungsgehäuse, in dem ein durchströmbarer Kanal ausgebildet ist, der durch eine Gehäusewand begrenzt ist und der einen ersten Kanalabschnitt mit einem ersten Durchströmungsquerschnitt aufweist, einen zweiten Kanalabschnitt, in welchem sich der Durchströmungsquerschnitt verringert und stromabwärts des zweiten Kanalabschnitts einen dritten Kanalabschnitt aufweist, in dem sich der Kanal mit verringertem Durchströmungsquerschnitt fortsetzt, sowie mit einem Klappenkörper, der drehbar auf einer Welle angeordnet und über die Welle im Strömungsgehäuse gelagert ist, einem Aktor, über den die Welle betätigbar ist und einer ersten Druckmessstelle im ersten Kanalabschnitt des Strömungsgehäuses und einer zweiten Druckmessstelle im dritten Kanalabschnitt.

Derartige Klappenvorrichtungen werden insbesondere in Verbrennungsmotoren von Kraftfahrzeugen eingesetzt und dienen dort beispielsweise zur Regelung eines Frischluftstroms zur Zuführung in die Zylinder oder zur Regelung eines zum Saugrohr zurückgeführten Abgasstroms, um Schadstoffe zu reduzieren.

Da es für die bekannten Anwendungen erforderlich ist, die Klappen in Abhängigkeit eines Volumenstroms oder eines Massenstroms des Gases zu regeln, sind verschiedene Regelstrategien entwickelt worden. So ist es bekannt eine Regelung über einen Stellungssensor vorzunehmen, der dann derart zu kalibrieren ist, dass jeder Stellung des Klappenkörpers beziehungsweise der Welle bei gleichen Umgebungsbedingungen ein Gasstrom zugeordnet wird, was jedoch im Betrieb zu einer ungenauen Regelung führt, da nicht alle Umgebungsbedingungen berücksichtigt werden können. Bei der Abgasrückführung ist es auch bekannt, die Regelung in Abhängigkeit anderer gemessener Motorkenndaten durchzuführen und daraufhin die Abgasrückführklappe nachzuregeln.

Insbesondere für die Verwendung im Ansaugbereich des Motors ist es auch bekannt, Luftmassenmesser zu verwenden, die nach dem Prinzip der Heißfilmanemometrie arbeiten oder den Gasstrom über eine Differenzdruckmessung zu bestimmen.

Eine solche Differenzdruckmessung im Abgasbereich ist aus der US 7,320,220 B1 bekannt, bei der eine Venturidüse genutzt wird, um mithilfe eines Druckdifferenzsensors, der vor der Einschnürung und im engsten Querschnitt der Düse misst, einen Abgasmassenstrom zu bestimmen und die so ermittelten Werte zur Ansteuerung einer stromabwärts der Venturidüse angeordneten Abgasrückführklappe zu nutzen. Auf diese Weise wird die Reaktionszeit verkürzt und es werden in den meisten Betriebszuständen ausreichende Mess- und Regelwerte erreicht. Problematisch ist eine derartige Messung jedoch bei kleinen gewünschten Abgasmengen beziehungsweise geringen Öffnungsquerschnitten des Abgasrückführventils. In diesen Betriebszuständen sind die Geschwindigkeiten im Bereich der Venturidüse so gering, dass die Messfehler prozentual zur tatsächlich geförderten Abgasmenge deutlich ansteigen.

Des Weiteren ist aus der DE 10 2006 001 032 A1 eine Volumenstrommessung im Bereich einer in einem Luftkanal angeordneten Drosselklappe bekannt, bei der ein Differenzdruck zwischen einer Druckmessstelle stromaufwärts des Klappenkörpers und einer Druckmessstelle gemessen wird, welche in einem axialen Abschnitt des Kanals angeordnet ist, der bei der Drehung des Klappenkörpers durchfahren wird. Es hat sich jedoch gezeigt, dass insbesondere bei kleineren Öffnungswinkeln des Klappenkörpers im Bereich der stromabwärtigen Druckmessstelle Turbulenzen auftreten, die zu Druckschwankungen führen, welche genaue Messungen verhindern.

Zusätzlich ist aus der US 2008/0221775 A1 eine Verbrennungskraftmaschine bekannt, bei der unmittelbar hinter der Welle der Drosselklappe eine Öffnung zur Druckmessung an einem von der Welle abgewandten Ende der Drosselklappe an der Gehäusewand ausgebildet ist. Diese Druckmessung dient zur Verbesserung der Berechnung einer einzuspritzenden Kraftstoffmenge,

Es stellt sich daher die Aufgabe, eine Regelvorrichtung bereitzustellen, mit welcher eine exakte Bestimmung eines vorhandenen Abgasmassenstroms in allen Betriebszuständen, insbesondere auch bei kleinen Abgasströmen ermöglicht wird, um die Stellung der Klappe in Abhängigkeit des Abgasmassenstroms zu regeln, wobei die Dichtigkeitserfordernisse erreicht werden sollen und eine möglichst hohe Kompaktheit der Regelvorrichtung erzielt werden soll. Entsprechend soll es auch möglich sein, auf Stellungssensoren vollständig zu verzichten.

Diese Aufgabe wird durch eine Regelvorrichtung mit den Merkmalen des Hauptanspruchs 1 gelöst. Weitere vorteilhafte Ausbildungen sind in den Unteransprüchen enthalten.

Dadurch, dass die zweite Druckmessstelle im dritten Kanalabschnitt innerhalb eines vom Klappenkörper bei seiner Drehung durchfahrenden axialen Abschnitts am in Umfangsrichtung der Gehäusewand betrachtet von der Welle entfernten Bereich des Strömungsgehäuses angeordnet ist, wird auch bei kleinen Gasströmen eine präzise Messung des Massenstromes möglich, da der für die Strömung zur Verfügung stehende Querschnitt kleiner ist und somit höhere Strömungsgeschwindigkeiten in diesem Abschnitt vorliegen. Auch bei fast geschlossener Klappe ist die Druckmessstelle immer im durchströmten Bereich angeordnet, in dem relativ geringe Verwirbelungen durch Strömungswiderstände bestehen. Unter Schwenkabschnitt des Klappenkörpers ist der axiale Abschnitt des Kanals zu verstehen, dessen Querschnitte zur Kanalachse in irgendeiner Position der Klappe von einem Klappenabschnitt berührt werden. Der von der Welle in Umfangsrichtung der Gehäusewand entfernte Bereich ist der Bereich der Gehäusewand, der bei einer mittig gelagerten Klappe um 90° versetzt zur Wellenachse angeordnet ist. Der dritte Kanalabschnitt kann sich dabei entweder mit konstantem Querschnitt weiter erstrecken oder gegebenenfalls wieder aufweiten. Mit einer solchen Vorrichtung werden über den gesamten Klappenstellwinkel sehr genaue Messwerte an den Druckmessstellen erzielt, die direkt zu einer Regelung des Aktors der Regelvorrichtung genutzt werden können.

Zusätzlich ist unmittelbar stromabwärts der zweiten Druckmessstelle ein Anschlagpunkt des Klappenkörpers am Strömungsgehäuse angeordnet, wobei sich der Klappenkörper bei Drehung des Klappenkörpers aus der den Kanal verschließenden Position von der zweiten Druckmessstelle entfernt. Dies bedeutet für eine mittig gelagerte Klappe, dass die Druckmessstelle an der Seite des Klappenkörpers angeordnet ist, der in Strömungsrichtung gedreht wird und dass die Druckmessstelle um etwa 90° versetzt zum Lager der Welle an der Gehäusewand ausgebildet ist. Durch diese Ausbildung liegt die Druckmessstelle auch bei geringen Klappenöffnungen im maximal durchströmten Bereich und zwar in einem verengten Querschnitt, jedoch bevor Verwirbelungen durch den Klappenkörper entstehen. Stattdessen wird in diesem Bereich eine gerichtete Strömung hoher Geschwindigkeit ausgebildet, wodurch die Druckmessung sehr exakt erfolgen kann. Hierdurch werden Messfehler verringert und eine zuverlässige Druckmessung im gesamten Stellbereich der Klappe über einen langen Zeitraum sichergestellt.

In einer bevorzugten Ausführungsform sind die Druckmessstellen als Öffnungen im Gehäuse ausgebildet, die mit mindestens einem Drucksensor fluidisch verbunden sind. Über die Öffnungen kann der Druck einfach in ein Gehäuse oder direkt zu zwei einzelnen oder einem Differenzdrucksensor geleitet werden.

Entsprechend ist es vorteilhaft, wenn zwei Drucksensoren in den Öffnungen des Strömungsgehäuses angeordnet sind. Dies erleichtert die Montage. Auch ist ein leckagefreier Verschluss der Öffnungen einfach herstellbar.

Alternativ ist es vorteilhaft, wenn der mindestens eine Drucksensor ein Differenzdrucksensor ist, was die Messung und Berechnung eines Massenstroms mit nur einem Bauteil ermöglicht.

In einer besonders bevorzugten Ausführungsform ist eine Ansteuerelektronik des Aktors mit dem mindestens einen Drucksensor elektrisch gekoppelt. Entsprechend kann die Ansteuerung des Aktors und damit der Klappe direkt in Abhängigkeit der Messwerte des mindestens einen Drucksensors erfolgen, wodurch beispielsweise auf zusätzliche Stellungssensoren am Aktor vollständig verzichtet werden kann, da eine direkte Rückkopplung über die gewünschte zu fördernde Gasmenge durchgeführt werden kann.

Des Weiteren ist es vorteilhaft, wenn eine Auswerteeinheit zur Berechnung eines Gasstroms aus den Messwerten des mindestens einen Drucksensors mit dem mindestens einen Drucksensor und der Ansteuerelektronik des Aktors elektrisch gekoppelt ist. Mit einer derartigen Vorrichtung kann zunächst aus den Druckmesswerten und gegebenenfalls anderen zusätzlichen Messwerten, wie beispielsweise der Temperatur ein exakter Massenstrom bestimmt werden, der im Folgenden als Istwert bei der Regelung des Ventils dem Aktor zum Vergleich mit dem Sollwert gegenübergestellt werden kann. Somit findet eine Regelung in direkter Abhängigkeit des für die Motorsteuerung relevanten Massenstroms als Steuergröße statt.

Die Ansteuerung des Aktors erfolgt somit vorteilhafterweise in Abhängigkeit der Messwerte des mindestens einen Drucksensors.

Eine besonders einfache Montage, durch welche auch eine Vormontage der gesamten Regelvorrichtung ermöglicht wird, ergibt sich, wenn in einem Aktorgehäuse, welches am Strömungsgehäuse befestigt oder einstückig mit diesem hergestellt ist, die Ansteuerelektronik des Aktors und der mindestens eine Drucksensor angeordnet sind. Dies bedeutet, dass die gesamte Elektronik in einem gemeinsamen Gehäuse angeordnet ist und die Einheiten direkt miteinander gekoppelt werden können oder auf einer gemeinsamen Platine ausgebildet werden können.

Um noch bessere Ergebnisse bei der kontinuierlichen Berechnung eines Massenstroms zu erzielen, ist am Strömungsgehäuse eine Temperaturmessstelle ausgebildet.

Vorteilhaft ist es entsprechend, wenn ein Temperatursensor der Temperaturmessstelle mit der Auswerteeinheit elektrisch verbunden ist, so dass dessen Messwerte direkt zur Verfügung stehen und zur Berechnung des Massenstroms herangezogen werden können.

In einer hierzu weiterführenden Ausführungsform erfolgt die Ansteuerung des Aktors in Abhängigkeit der Messwerte des mindestens einen Drucksensors und des Temperatursensors, wodurch eine sehr exakte Massenstromberechnung ermöglicht wird.

Hierzu ist die Temperaturmessstelle als Öffnung am Strömungsgehäuse ausgebildet, die fluidisch mit dem Temperatursensor verbunden ist. Dies kann entweder eine der Öffnungen sein, die bereits für die Druckmessung benutzt werden oder eine zusätzlich dritte Öffnung. Es ergibt sich eine sehr genaue und direkte Temperaturmessung.

Bei dieser Ausführung ist es besonders vorteilhaft, wenn der Temperatursensor ebenfalls im Aktorgehäuse angeordnet ist. Auf ein zusätzliches Gehäuse kann so verzichtet werden und die Verbindung zur Auswerteeinheit wird deutlich erleichtert.

Alternativ ist es möglich, dass der Temperatursensor in der Öffnung am Strömungsgehäuse befestigt ist. So kann ein dichter Verschluss zum Kanal auf einfache Weise hergestellt werden und die Messgenauigkeit erhöht werden, da direkt im Gasstrom gemessen wird.

In einer bevorzugten Ausbildung der Erfindung bilden das Strömungsgehäuse mit dem Aktor, dem Aktorgehäuse und dem Klappenkörper mit der Welle eine vormontierbare Baueinheit, wodurch das komplette Modul am übrigen Verbrennungsmotor angebracht oder ausgetauscht oder nachgerüstet werden kann. Die Montage wird so aufgrund deutlich verbesserter Zugänglichkeit erheblich vereinfacht.

Es wird somit eine Regelvorrichtung geschaffen, welche genaue Messwerte für einen zu bestimmenden Massenstrom oder Volumenstrom liefert und gleichzeitig klein und kompakt aufgebaut und vormontierbar ist. Die Teileanzahl und die notwendigen Montageschritte werden im Vergleich zu bekannten Ausführungen verringert. Eine Regelung der Klappe kann vollständig, ohne zusätzliche Sensoren verwenden zu müssen, mit Hilfe der Messergebnisse der Drucksensoren erfolgen. Dies ermöglicht eine direkte, schnellere und exaktere Regelung des von der Motorsteuerung geforderten Massenstroms.

Ein Ausführungsbeispiel einer erfindungsgemäßen Regelvorrichtung ist in den Figuren dargestellt und wird nachfolgend beschrieben,

Die Figur1 zeigt eine Seitenansicht der erfindungsgemäßen Regelvorrichtung in geschnittener Darstellung,

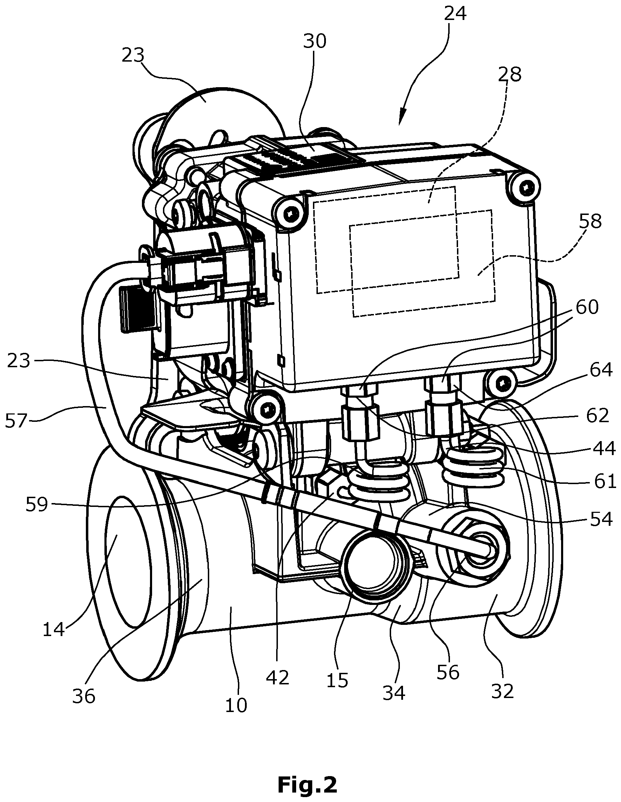

Die Figur 2 zeigt die erfindungsgemäße Regelvorrichtung aus Figur 1 von einer entgegengesetzten Seite in perspektivischer Darstellung.

Die erfindungsgemäße Regelvorrichtung besteht aus einem Strömungsgehäuse 10, in welchem ein von einem Gas durchströmbarer Kanal 12 ausgebildet ist, der durch eine umgebende Gehäusewand 14 des Strömungsgehäuses 10 begrenzt wird. An zwei radial gegenüberliegenden Seiten des Kanals 12 sind im Strömungsgehäuse 10 zwei Lagerstellen 15 ausgebildet, in denen eine Welle 16 drehbar gelagert ist. Auf der Welle 16 ist ein Klappenkörper 18 befestigt, mittels dessen ein Massenstrom beziehungsweise Volumenstrom des Gases durch Drehung der Welle 16 im Kanal 12 geregelt werden kann, wobei die Welle 16 den Klappenkörper 18 in eine erste Klappenhälfte 20 und eine zweite Klappenhälfte 22 teilt.

Zur Erzeugung der Drehbewegung ist ein aus dem Strömungsgehäuse 10 ragendes Ende der Welle 16 beispielsweise über ein Hebelgestänge 23 mit einem Aktor 24 verbunden, der aus einem Elektromotor 26 und gegebenenfalls einem nachgeschalteten Getriebe besteht, welche mit einer Ansteuerelektronik 28 des Aktors 24 in einem Aktorgehäuse 30 angeordnet sind.

Der Kanal 12 weist drei axial hintereinander liegende Kanalabschnitte 32, 34, 36 auf, von denen der erste Kanalabschnitt 32 den größten Durchmesser beziehungsweise größten Durchströmungsquerschnitt aufweist, An diesen ersten Kanalabschnitt 32 schließt sich ein zweiter Kanalabschnitt an, der als Einschnürung ausgebildet ist, sodass sich in dessen Verlauf der Durchströmungsquerschnitt stetig verringert und zwar bis auf einen kleinsten Durchmesser. Von diesem kleinsten Querschnitt aus setzt sich der Kanal 12 im dritten Kanalabschnitt 36, in dem auch die Lagerung der Welle 16 des Klappenkörpers 18 angeordnet ist, mit diesem verringerten Durchmesser fort.

Im Kanal 12 sind zwei Öffnungen 38, 40 ausgebildet, welche als Druckmessstellen 42, 44 dienen. Die erste Öffnung 38 befindet sich im ersten Kanalabschnitt 32, während die zweite Öffnung 40 im dritten Kanalabschnitt 36 und somit hinter der Einschnürung ausgebildet ist. In Umfangsrichtung der Gehäusewand 14 betrachtet befinden sich beide Öffnungen 38, 40 auf gleicher Höhe, sind also axial hintereinander angeordnet und zwar beidseits um 90° versetzt zu den Lagerstellen der Welle 16 und damit in Umfangsrichtung betrachtet in einem von der Welle 16 entfernten Bereich 46 des Strömungsgehäuses 10.

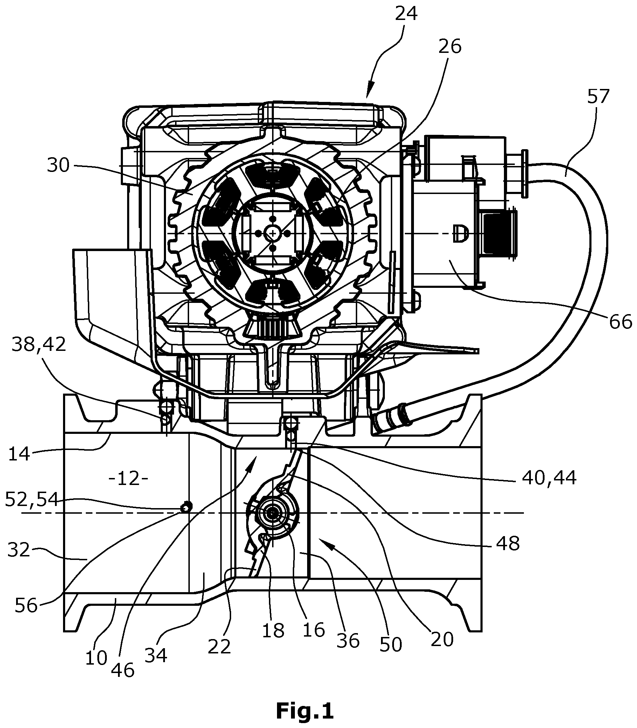

Der Klappenkörper 18 befindet sich in der in der Figur 1 dargestellten Stellung in seiner den Durchströmungsquerschnitt des dritten Kanalabschnitts 36 verschließenden Position. In dieser Position liegt der Klappenkörper 18 in Strömungsrichtung betrachtet unmittelbar stromabwärts der zweiten Öffnung 40 an einem Anschlagpunkt 48 an der Gehäusewand 14 an. Bei Öffnung des Durchströmungsquerschnitts wird die zur Öffnung 40 gerichtete Klappenhälfte 20 in Strömungsrichtung und damit in ihre sich von der Öffnung 40 entfernende Richtung gedreht, während die andere Klappenhälfte 22 zur Strömung hin, also stromaufwärts, gedreht wird. Somit liegt die zweite Öffnung 40 immer im maximal durchströmten Bereich, so dass Druckänderungen an dieser Druckmessstelle 44 bereits bei sehr kleinen Öffnungswinkeln des Klappenkörpers 18 messbar sind, da die Druckmessstelle 40 in dem Bereich angeordnet ist, in welchem bei geringer Öffnung des Klappenkörpers 18 ein Durchströmungsquerschnitt für das zu regelnde Gas freigegeben wird und somit eine messbare Strömung entsteht. Hierzu ist es erforderlich, dass diese zweite Druckmessstelle 44 sich innerhalb des Schwenkabschnitts 50 des Klappenkörpers 18, also des bei der Drehung des Klappenkörpers 18 vom Klappenkörper 18 durchfahrenen axialen Abschnitts im dritten Kanalabschnitt 36 befindet und zwar stromaufwärts des Anschlagpunktes 48 des von der Welle 16 entfernten Ende des Klappenkörpers 18, da in dieser Position immer eine gerichtete Strömung mit geringen Verwirbelungen entsteht und zwar unabhängig von der Stellung des Klappenkörpers 18.

Zusätzlich ist im ersten Kanalabschnitt 32 eine dritte Öffnung 52 ausgebildet, die als Temperaturmessstelle 54 dient und in vorliegendem Ausführungsbeispiel um 90° versetzt zur ersten Öffnung 38 ausgebildet ist. An dieser Öffnung 52 ist ein Temperatursensor 56 befestigt, der über eine Leitung 57, die zum Aktorgehäuse 30 führt elektrisch mit einer ebenfalls im Innern des Aktorgehäuses 30 angeordneten Auswerteeinheit 58 verbunden, die im Innern des Aktorgehäuses 30 mit der Ansteuerelektronik 28 des Aktors 24 elektrisch verbunden ist.

Von der ersten Öffnung 38 und von der zweiten Öffnung 40 führt jeweils eine abgedichtete Leitung 59, 61 zu einem Drucksensor 60, der als Differenzdrucksensor ausgeführt ist oder zu zwei separaten Drucksensoren 62, 64, welche ebenso wie der Differenzdrucksensor 60 am Aktorgehäuse 30 befestigt werden können und im Aktorgehäuse 30 angeordnet sind. Diese werden derart an die beiden Leitungen 59, 61 angeschlossen ist, dass ein Differenzdruck zwischen der ersten Druckmessstelle 42 und der zweiten Druckmessstelle 44 entweder direkt gemessen oder berechnet wird. Selbstverständlich können die Drucksensoren auch direkt an den Öffnungen 38, 40 angeordnet werden, so dass lediglich elektrische Leitungen zum Aktorgehäuse 30 führen. Der als Differenzdrucksensor ausgebildete Drucksensor 60 oder die beiden Drucksensoren 62, 64 sind im Innern des Aktorgehäuses 30 über elektrische Leitungen ebenso wie der Temperatursensor 56 mit der Auswerteeinheit 58 verbunden, welche wiederum über einen Stecker 66 mit einem Motorsteuergerät des Verbrennungsmotors gekoppelt ist, über den auch die Spannungsversorgung des Aktors 24 erfolgt.

Die Messwerte des Differenzdrucksensors 60 oder der Drucksensoren 62, 64 und des Temperatursensors 56 werden direkt zur Ansteuerung und Regelung des Klappenkörpers 18 genutzt, indem in der Auswerteeinheit 58 aus den Daten des Differenzdrucksensors 60 und des Temperatursensors 56 ein Massenstrom berechnet wird, welcher mit dem vom Motorsteuergerät übermittelten Sollwert des Massenstroms verglichen wird. Entsprechend der vorhandenen Differenz wird im Folgenden aufgrund des daraufhin in der Ansteuerelektronik 28 erzeugten Regelsignals der Klappenkörper 18 über den Aktor 24 gedreht, um entweder den Massenstrom weiter zu drosseln oder einen zusätzlichen Durchströmungsquerschnitt freizugeben. Durch die kontinuierliche Übertragung und Berechnung des tatsächlichen Massenstroms, kann der Klappenkörper 18 sehr schnell in eine Position gedreht werden, in der der Sollwert mit dem berechneten Istwert übereinstimmt, ohne dass hierzu ein Stellungssignal am Aktor 24 verwendet werden muss.

Die entstehende Strömung wird über die Sensoren 60, 62, 64, 56 aufgrund der Anordnung der Messstellen 42, 44, 54 im Kanal 12 bereits bei kleinen Durchströmungsquerschnitten zuverlässig gemessen.

Die beschriebene Regelvorrichtung liefert zuverlässig sehr exakte Messergebnisse, die zur Einstellung des Aktors in kürzester Zeit genutzt werden können, so dass eine sehr schnelle und direkte Regelung erfolgt. Auch bei sehr kleinen Gasströmen, wie Luftströmen oder Abgasströmen wird eine hohe Genauigkeit der Messwerte und damit der Regelung erreicht, da im Bereich der zweiten Druckmessstelle auch bei sehr geringen Öffnungsquerschnitten eine messbare und gleichgerichtete Strömung vorliegt, welche nicht durch Turbulenzen verfälscht wird. Die gesamte Regelvorrichtung kann vormontiert werden. Einzige Schnittstelle der Elektronik nach außen ist der Stecker des Aktors, so dass eine hohe Dichtigkeit erreichbar ist und die Montage deutlich vereinfacht werden kann, da die Bauteile zur Aktuierung der Klappe und zur Massenstrommessung in ein gemeinsames Gehäuse integriert sind.

Es sollte deutlich sein, dass im Vergleich zum beschriebenen Ausführungsbeispiel verschiedene Modifikationen möglich sind, ohne den Schutzbereich des Hauptanspruchs zu verlassen. So kann statt des Differenzdrucksensors mit zwei einzelnen Drucksensoren gearbeitet werden oder die Auswerteeinheit im Motorsteuergerät integriert werden. Ebenso können im Aktorgehäuse ein oder zwei Platinen für die Auswerteinheit und die Ansteuerelektronik benutzt werden. Die notwendigen Verbindungsleitungen können in eines der Gehäuseteile mit eingegossen werden oder separat verlegt werden. Auch kann beispielswiese die erste Öffnung gleichzeitig als erste Druckmessstelle und Temperaturmessstelle dienen, so dass auf eine der Öffnungen verzichtet werden kann. Insbesondere ist es auch möglich eine derartige Regelvorrichtung zweiflutig auszuführen, wobei in jeder der beiden Fluten der oder die Drucksensoren zur Massenstrombestimmung in der beanspruchten Form enthalten sind. Weitere konstruktive Änderungen sind selbstverständlich ebenfalls denkbar, wie eine stromabwärts der Klappe angeordnete Einrichtung zur Strömungsgleichrichtung und Strömungsgleichverteilung, die beispielswiese durch entsprechend angeordnete Rippen im Kanal hergestellt werden kann und insbesondere bei kleinen Öffnungswinkeln der Klappe wirkt. Eine Anwendung als Abgasregelklappe, Luftregelklappe oder auch Regelklappe eines Gasgemisches sind denkbar.

## Patentansprüche

1. Regelvorrichtung für eine Verbrennungskraftmaschine mit einem Strömungsgehäuse (10), in dem ein durchströmbarer Kanal (12) ausgebildet ist, der durch eine Gehäusewand (14) begrenzt ist und einen ersten Kanalabschnitt (32) mit einem ersten Durchströmungsquerschnitt aufweist, einen zweiten Kanalabschnitt (34), in welchem sich der Durchströmungsquerschnitt verringert und stromabwärts des zweiten Kanalabschnitts (34) einen dritten Kanalabschnitt (36) aufweist, in dem sich der Kanal (12) mit verringertem Durchströmungsquerschnitt fortsetzt,
einem Klappenkörper (18), der drehbar auf einer Welle (16) angeordnet und über die Welle (16) im Strömungsgehäuse (10) gelagert ist,
einem Aktor (24), über den die Welle (16) betätigbar ist und
einer ersten Druckmessstelle (42) im ersten Kanalabschnitt (32) des Strömungsgehäuses (10) und einer zweiten Druckmessstelle (44) im dritten Kanalabschnitt (36),
**dadurch gekennzeichnet, dass**
die zweite Druckmessstelle (44) Im dritten Kanalabschnitt (36) innerhalb eines vom Klappenkörper (18) bei seiner Drehung durchfahrenden axialen Abschnitts (50) am in Umfangsrichtung der Gehäusewand (14) betrachtet von der Welle (16) entfernten Bereich des Strömungsgehäuses (10) angeordnet ist, wobei unmittelbar stromabwärts der zweiten Druckmessstelle (44) ein Anschlagpunkt (48) des Klappenkörpers (18) am Strömungsgehäuse (10) angeordnet ist, wobei sich der Klappenkörper (18) bei Drehung des Klappenkörpers (18) aus der den Kanal (12) verschließenden Position von der zweiten Druckmessstelle (44) entfernt.

2. Regelvorrichtung für eine Verbrennungskraftmaschine nach Anspruch 1,
**dadurch gekennzeichnet, dass**
die Druckmessstellen (42, 44) als Öffnungen (38, 40) im Strömungsgehäuse (10) ausgebildet sind, die mit mindestens einem Drucksensor (60; 62, 64) fluidisch verbunden sind.

3. Regelvorrichtung für eine Verbrennungskraftmaschine nach einem Anspruch 2,
**dadurch gekennzeichnet, dass**
zwei Drucksensoren (62, 64) in den Öffnungen (38, 40) des Strömungsgehäuses (10) angeordnet sind.

4. Regelvorrichtung für eine Verbrennungskraftmaschine nach einem der Ansprüche 2 oder 3,
**dadurch gekennzeichnet, dass**
der mindestens eine Drucksensor ein Differenzdrucksensor (60) ist.

5. Regelvorrichtung für eine Verbrennungskraftmaschine nach einem der vorhergehenden Ansprüche,
**dadurch gekennzeichnet, dass**
eine Ansteuerelektronik (28) des Aktors (24) mit dem mindestens einen Drucksensor (60; 62, 64) elektrisch gekoppelt ist.

6. Regelvorrichtung für eine Verbrennungskraftmaschine nach einem der Ansprüche 1 bis 4,
**dadurch gekennzeichnet, dass**
eine Auswerteeinheit (58) zur Berechnung eines Gasstroms aus den Messwerten des mindestens einen Drucksensors (60; 62, 64) mit dem mindestens einen Drucksensor (60; 62, 64) und der Ansteuerelektronik (28) des Aktors (24) elektrisch gekoppelt ist.

7. Regelvorrichtung für eine Verbrennungskraftmaschine nach einem der vorhergehenden Ansprüche,
**dadurch gekennzeichnet, dass**
die Ansteuerung des Aktors (24) in Abhängigkeit der Messwerte des mindestens einen Drucksensors (60; 62, 64) erfolgt.

8. Regelvorrichtung für eine Verbrennungskraftmaschine nach einem der Ansprüche 5 bis 7,
**dadurch gekennzeichnet, dass**
in einem Aktorgehäuse (30), welches am Strömungsgehäuse (10) befestigt oder einstückig mit diesem hergestellt ist, die Ansteuerelektronik (28) des Aktors (24) und der mindestens eine Drucksensor (60; 62, 64) angeordnet sind.

9. Regelvorrichtung für eine Verbrennungskraftmaschine nach einem der vorhergehenden Ansprüche,
**dadurch gekennzeichnet, dass**
am Strömungsgehäuse (10) eine Temperaturmessstelle (54) ausgebildet ist.

10. Regelvorrichtung für eine Verbrennungskraftmaschine nach Anspruch 9,
**dadurch gekennzeichnet, dass**
ein Temperatursensor (56) der Temperaturmessstelle (54) mit der Auswerteeinheit (58) elektrisch verbunden ist.

11. Regelvorrichtung für eine Verbrennungskraftmaschine nach Anspruch 10,
**dadurch gekennzeichnet, dass**
die Ansteuerung des Aktors (24) in Abhängigkeit der Messwerte des mindestens einen Drucksensors (60; 62, 64) und des Temperatursensors (56) erfolgt.

12. Regelvorrichtung für eine Verbrennungskraftmaschine nach einem der Ansprüche 10 oder 11,
**dadurch gekennzeichnet, dass**
die Temperaturmessstelle (54) als Öffnung (52) am Strömungsgehäuse (10) ausgebildet ist, die fluidisch mit dem Temperatursensor (56) verbunden ist.

13. Regelvorrichtung für eine Verbrennungskraftmaschine nach einem der Ansprüche 10 bis 12,
**dadurch gekennzeichnet, dass**
der Temperatursensor (56) im Aktorgehäuse (30) angeordnet ist.

14. Regelvorrichtung für eine Verbrennungskraftmaschine nach einem der Ansprüche 10 bis 12,
**dadurch gekennzeichnet, dass**
der Temperatursensor (56) in der Öffnung (52) am Strömungsgehäuse (10) befestigt ist.

15. Regelvorrichtung für eine Verbrennungskraftmaschine nach einem der vorhergehenden Ansprüche,
**dadurch gekennzeichnet, dass**
das Strömungsgehäuse (10) mit dem Aktor (24), dem Aktorgehäuse (30) und dem Klappenkörper (18) mit der Welle (16) eine vormontierbare Baueinheit bilden.

## Claims

1. Control device for an internal combustion engine comprising
a flow housing (10) in which a flow-through duct (12) is formed which is defined by a housing wall (14) and comprises a first duct section (32) with a first flow cross section, a second duct section (34) in which the flow cross section decreases, and a third duct section (36) downstream of the second duct section (34), in which the duct (12) continues with a reduced flow cross section,
a flap body (18) arranged rotatably on a shaft (16) and supported in the flow housing (10) by the shaft (16),
an actuator (24) via which the shaft (16) is actuatable, and
a first pressure measuring point (42) in the first duct section (32) of the flow housing (10) and a second pressure measuring point (44) in the third duct section (36),
**characterized in that**
the second pressure measuring point (44) in the third duct section (36) is arranged within an axial section (50), passed through by the flap body (18) as it rotates, at the region of the flow housing (10) remote from the shaft (16) seen in the circumferential direction of the housing wall (14), wherein immediately downstream of the second pressure measuring point (44) an abutment point (48) of the flap body (18) on the flow housing (10) is arranged, wherein the flap body (18), upon rotation of the flap body (18) from the position closing the duct (12), moves away from the second pressure measuring point (44).

2. Control device for an internal combustion engine of claim 1, **characterized in that** the pressure measuring points (42, 44) are realized as as openings (38, 40) in the flow housing (10), which are in fluid communication with at least one pressure sensor (60, 62, 64).

3. Control device for an internal combustion engine of claim 2, **characterized in that** two pressure sensors (62, 64) are arranged in the openings (38, 40) of the flow housing (10).

4. Control device for an internal combustion engine of one of claims 2 or 3, **characterized in that** the at least one pressure sensor is a differential pressure sensor (60).

5. Control device for an internal combustion engine of one of the preceding claims, **characterized in that** control electronics (28) of the actuator (24) are electrically coupled with the at least one pressure sensor (60; 62, 64).

6. Control device for an internal combustion engine of one of claims 1 to 4, **characterized in that** an evaluation unit (58) for calculating a gas flow from the measured values of the at least one pressure sensor (60, 62, 64) is electrically coupled with the at least one pressure sensor (60, 62, 64) and control electronics (28) of the actuator (24).

7. Control device for an internal combustion engine of one of the preceding claims, **characterized in that** the control of the actuator (24) is performed as a function of the measured values of the at least one pressure sensor (60, 62, 64).

8. Control device for an internal combustion engine of one of claims 5 to 7, **characterized in that** the control electronics (28) of the actuator (24) and the at least one pressure sensor (60; 62,64) are arranged in an actuator housing (30) mounted to the flow housing (10) or manufactured integrally therewith.

9. Control device for an internal combustion engine of one of the preceding claims, **characterized in that** a temperature measuring point (54) is formed on the flow housing (10).

10. Control device for an internal combustion engine of claim 9, **characterized in that** a temperature sensor (56) of the temperature measuring point (54) is electrically connected with the evaluation unit (58).

11. Control device for an internal combustion engine of claim 10, **characterized in that** the control of the actuator (24) is performed as a function of the measured values of the at least one pressure sensor (60; 62, 64) and the temperature sensor (56).

12. Control device for an internal combustion engine of one of claims 10 or 11, **characterized in that** the temperature measuring point (54) is realized as an opening (52) on the flow housing (10), which opening is in fluid communication with the temperature sensor (56).

13. Control device for an internal combustion engine of one of claims 10 to 12, **characterized in that** the temperature sensor (56) is arranged in the actuator housing (30).

14. Control device for an internal combustion engine of one of claims 10 to 12, **characterized in that** the temperature sensor (56) is fixed to the flow housing (10) in the opening (52).

15. Control device for an internal combustion engine of one of the preceding claims, **characterized in that** the flow housing (10) forms a preassembled structural unit with the actuator (24), the actuator housing (30) and the valve body (18).

## Revendications

1. Dispositif de réglage pour un moteur à combustion interne avec
un boitier d'écoulement (10) dans lequel un canal d'écoulement traversant (12) est formé, qui est délimité par une paroi de boitier (14) et présent une première section de canal (32) avec une première section transversale d'écoulement, une seconde section de canal (34) dans laquelle la section transversale d'écoulement diminue et présente, en aval de la deuxième section de canal (34), une troisième section de canal (36) dans laquelle le canal (12) continue avec une section transversale d'écoulement réduite,
un corps de clapet (18) disposé à rotation sur un arbre (16) et supporté sur l'arbre (16) dans le boîtier d'écoulement (10),
un actionneur (24) par lequel l'arbre (16) peut être actionné et
un premier point de mesure de pression (42) dans la première section de canal (32) du boîtier d'écoulement (10) et un deuxième point de mesure de pression (44) dans la troisième section de canal (36),
**caractérisé en ce que** le deuxième point de mesure de pression (44) dans la troisième section de canal (36) est disposé dans une section axiale (50) traversée par le corps de clapet (18) lors de sa rotation, au niveau de la région du boîtier d'écoulement (10) opposée à l'arbre (16), vu dans la direction circonférentielle de la paroi du boîtier (14), un point de butée (48) du corps de clapet (18) étant disposé sur le boitier d'écoulement (10) immédiatement en aval du deuxième point de mesure de pression (44), le corps de clapet (18) s'éloignant du deuxième point de mesure de pression (44) lors de rotation du corps de clapet (18) à partir de la position de fermeture du canal (12).

2. Dispositif de réglage pour un moteur à combustion interne selon la revendication 1, **caractérisé en ce que** les points de mesure de pression (42, 44) sont réalisées comme ouvertures (38, 40) dans le boitier d'écoulement (10), les ouvertures étant en communication fluidique avec au moins un capteur de pression (60; 62, 64).

3. Dispositif de réglage pour un moteur à combustion interne selon la revendication 2, **caractérisé en ce que** deux capteurs de pression (62, 64) sont disposés dans les ouvertures (38, 40) du boitier d'écoulement (10).

4. Dispositif de réglage pour moteur à combustion interne selon l'une des revendications 2 ou 3, **caractérisé en ce que** ledit au moins un capteur de pression est un capteur de pression différentielle (60).

5. Dispositif de réglage pour un moteur à combustion interne selon l'une quelconque des revendications précédentes, **caractérisé en ce qu'**une électronique de commande (28) de l'actionneur (24) est reliée électriquement avec ledit au moins un capteur de pression (60; 62, 64).

6. Dispositif de réglage pour un moteur à combustion interne selon l'une des revendications 1 à 4, **caractérisé en ce qu'**une unité d'évaluation (58) servant à calculer un débit de gaz à partir des valeurs mesurées d'au moins un capteur de pression (60, 62, 64) est reliée électriquement avec au moins un capteur de pression (60, 62, 64) et l'électronique de commande (28) de l'actionneur (24).

7. Dispositif de réglage pour moteur à combustion interne selon l'une quelconque des revendications précédentes, **caractérisé en ce que** l'actionnement de l'actionneur (24) est effectué en fonction des valeurs mesurées dudit au moins un capteur de pression (60, 62, 64).

8. Dispositif de réglage pour moteur à combustion interne selon l'une des revendications 5 à 7, **caractérisé en ce que** dans un boîtier d'actionneur (30) fixé au boîtier d'écoulement (10) ou fabriqué d'une seule pièce avec celui-ci, l'électronique de commande (28) de l'actionneur (24) et au moins un capteur de pression (60; 62,64) sont disposés.

9. Dispositif de réglage pour moteur à combustion interne selon l'une quelconque des revendications précédentes, **caractérisé en ce qu'**un point de mesure de température (54) est formé sur le boitier d'écoulement (10).

10. Dispositif de réglage pour moteur à combustion interne selon la revendication 9, **caractérisé en ce qu'**un capteur de température (56) du point de mesure de température (54) est relié électriquement avec l'unité d'évaluation (58).

11. Dispositif de réglage pour un moteur à combustion interne selon la revendication 10, **caractérisé en ce que** l'actionnement de l'actionneur (24) dépend des valeurs mesurées dudit au moins un capteur de pression (60; 62, 64) et du capteur de température (56).

12. Dispositif de réglage pour un moteur à combustion interne selon l'une des revendications 10 ou 11, **caractérisé en ce que** le point de mesure de température (54) est réalisé comme une ouverture (52) sur le boîtier d'écoulement (10), qui est en communication fluidique avec le capteur de température (56).

13. Dispositif de réglage pour un moteur à combustion interne selon l'une des revendications 10 à 12, **caractérisé en ce que** le capteur de température (56) est disposé dans le boîtier d'actionneur (30).

14. Dispositif de réglage pour un moteur à combustion interne selon l'une des revendications 10 à 12, **caractérisé en ce que** le capteur de température (56) est fixé dans l'ouverture (52) sur le boitier d'écoulement (10).

15. Dispositif de réglage pour moteur à combustion interne selon l'une quelconque des revendications précédentes, **caractérisé en ce que** le boitier d'écoulement (10) forme un ensemble prémonté avec l'actionneur (24), le boitier d'actionneur (30) et le corps de soupape (18) avec l'arbre (16).
